# EUROPÄISCHE PATENTSCHRIFT

(11) **EP 0 576 815 B1**
(45) Veröffentlichungstag und Bekanntmachung des Hinweises auf die Patenterteilung: **04.09.1996**
(21) Anmeldenummer: 93107930.5
(22) Anmeldetag: 14.05.1993
(51) Int. Cl.: B64C 13/30, B64C 13/10, F16B 31/02, F16C 17/24, F16C 11/02, G01L 5/24

(54) **Scherbolzenverbindung**
Shear bolt coupling
Accouplement à boulons de cisaillement

(30) Priorität: 01.07.1992 DE 4221607
(43) Veröffentlichungstag der Anmeldung: 05.01.1994
(73) Patentinhaber: Daimler-Benz Aerospace Airbus Gesellschaft mit beschränkter Haftung, D-21129 Hamburg (DE)
(72) Erfinder: Dyckrup, Werner, W-2849 Visbek (DE)
(74) Vertreter: Hansmann, Dierk, Dipl.-Ing.

(56) Entgegenhaltungen:
- WO-A-91/08398
- FR-A- 1 283 372
- GB-A- 1 479 815
- GB-A- 2 106 256
- US-A- 3 987 699

## Beschreibung

Die Erfindung betrifft eine Scherbolzenverbindung zwischen zwei Komponenten, insbesondere zwischen einem Antriebsarm und einer Antriebsschwinge als den beiden Komponenten einer Betätigungsanordnung für eine Flügelklappe eines Verkehrsflugzeuges.

Bei Scherbolzenverbindungen zwischen den Elementen eines Kurbeltriebes, beispielsweise einer Antriebsschwinge und einem Antriebsarm als Teilelemente einer Kinematik für die Klappenverstellung an einem Flugzeugtragflügel, kann es bei bestimmten Betriebszuständen zu mechanischer Überlastung des Scherbolzens kommen. Eine solche Situation ist beispielsweise dann gegeben, wenn in einer Totpunktlage zwischen dem Antriebsarm und der Antriebsschwinge eine Störung auftritt, durch die der Antriebsarm blockiert wird. Auch wenn dieser störfall nicht unmittelbar zum Bruch des Scherbolzens führt, kann er doch eine bleibende plastische Verformung verursachen, deren Folge eine verminderte mechanische Festigkeit dieses Scherbolzens ist. In der Praxis sind derartige Vorschädigungen ohne eine vollständige Demontage der gesamten Anordnung nicht festzustellen, so daß sie unter Umständen über längere Zeit unentdeckt bleiben und damit ein Risiko für die Betriebssicherheit der betreffenden Struktur, in diesem Fall für das gesamte Flugzeug, darstellen.

Aufgabe der Erfindung ist es deshalb, eine Scherbolzenverbindung der eingangs genannten Art so auszubilden, daß eine vorhandene Vorschädigung des Scherbolzens im Rahmen einer normalen Wartungsinspektion von außen erkannt werden kann, ohne daß hierfür eine Demontage der gesamten Scherbolzenverbindung erforderlich ist.

Die Erfindung löst diese Aufgabe durch eine Scherbolzenverbindung mit den kennzeichnenden Merkmalen des Patentanspruchs 1. Vorteilhafte Weiterbildungen der erfindungsgemäßen Scherbolzenverbindung, die insbesondere dem Schutz der umgebenden Struktur dienen, sind in den weiteren Ansprüchen angegeben. Die Erfindung ist dabei selbstverständlich nicht auf die Verwendung von Scherbolzenverbindungen im Bereich des Flugzeugbaus beschränkt, sondern überall dort einsetzbar, wo Scherbolzenverbindungen benutzt werden.

Im folgenden soll die Erfindung anhand eines in der Zeichnung dargestellten Ausführungsbeispiels näher erläutert werden. Es zeigen:
- Fig. 1: einen teil eines Klappenantriebes an einem Tragflügel eines Verkehrsflugzeuges,
- Fig. 2: einen vergrößerten Ausschnitt der Anordnung gemäß Fig. 1,
- Fig. 3: einen Schnitt gemäß III-III durch die in Fig. 2 dargestellte Anordnung,
- Fig. 4: einen Schnitt gemäß IV-IV durch die in Fig. 2 dargestellt Anordnung und
- Fig. 5 und 6: jeweils in perspektivischer Darstellung Teilelemente der Anordnung nach den Figuren 2 bis 4.

In den Figuren sind gleiche Bauelemente mit den gleichen Bezugszeichen versehen.

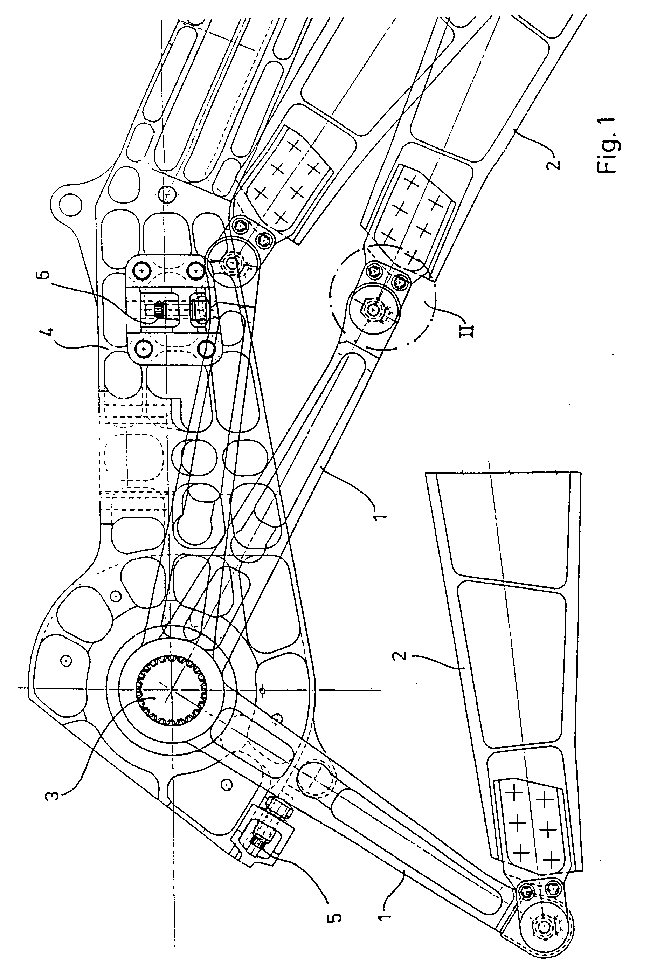

Bei der in Fig. 1 gezeigten Anordnung handelt es sich um einen Teil eines Klappenantriebes für ein Verkehrsflugzeug. Bei dieser Kinematik sind eine Antriebsschwinge 1 sowie ein Antriebsarm 2 über eine Scherbolzenverbindung miteinander gekoppelt. Die Antriebsschwinge 1 ist mit einer Antriebswelle 3 verbunden, die an der Struktur 4 des Tragflügels gehaltert ist, während das in der Figur nicht sichtbare Ende des Antriebsarmes 2 mit einer Halterung für die zu betätigende Flügelklappe verbunden ist. Bei der Darstellung gemäß Fig. 1 ist die aus der Antriebsschwinge 1 und dem Antriebsarm 2 bestehende Betätigungseinrichtung für die Flügelklappe in drei verschiedenen Positionen, entsprechend drei unterschiedlichen Stellungen der zu betätigenden Flügelklappe, gezeigt. Der Weg der Betätigungseinrichtung wird dabei von zwei Positions- oder Endschaltern 5 und 6 begrenzt.

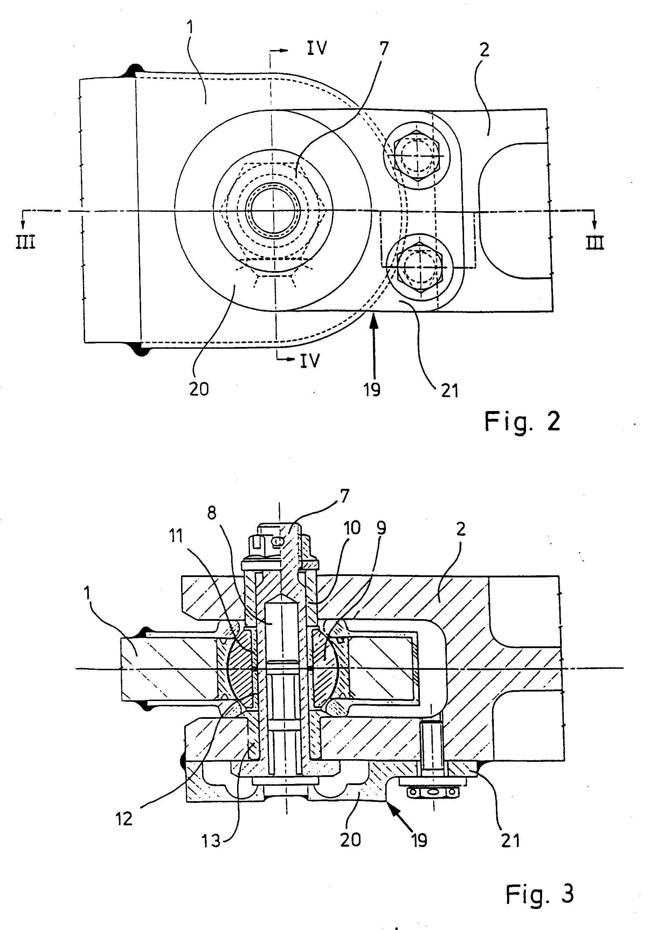

Der durch einen Scherbolzen 7 verbundene Bereich der Antriebsschwinge 1 und des Antriebsarmes 2 ist in den Figuren 2 bis 4 im Detail dargestellt. Wie dabei erkennbar ist, weist der Scherbolzen 7 eine zentrische Sacklochbohrung 8 auf, die sich nahezu über die gesamte Länge desjenigen Teils des Scherbolzens 7 erstreckt, der sich in den entsprechenden Aufnahmebohrungen der beiden miteinander gekoppelten Betätigungselemente 1 und 2 befindet. Das antriebsseitige Ende des Antriebsarmes 2 ist dabei gabelförmig erweitert und umgibt das halbkreisförmig gerundete Ende der Antriebsschwinge 1.

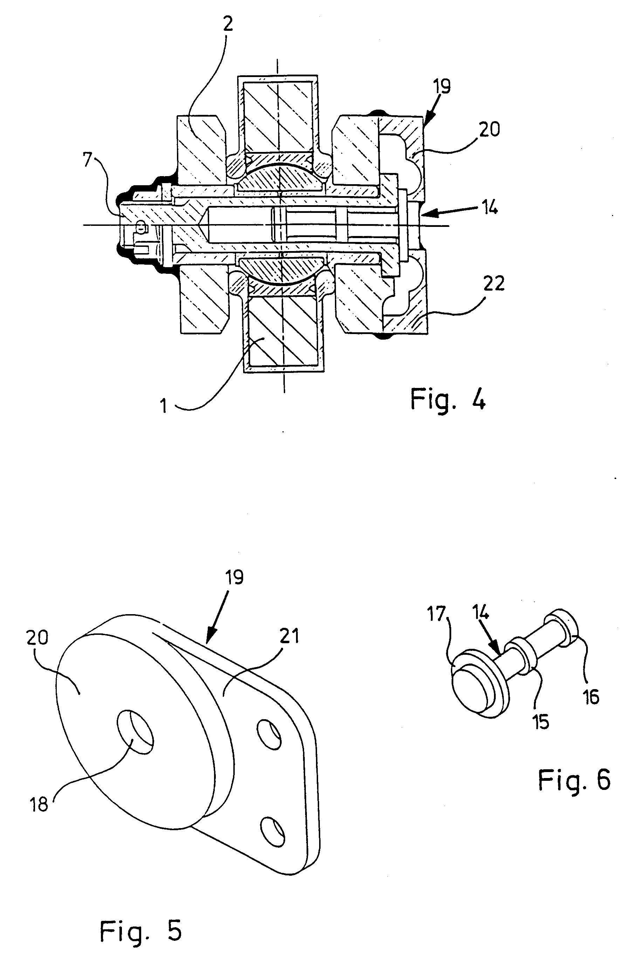

Wie insbesondere aus den Figuren 3 und 4 erkennbar, ist der Scherbolzen 7 über ein Gelenklager 9 in der Antriebsschwinge 1 gehaltert. Zum Schutz von Antriebsschwinge 1 und Antriebsarm 2 vor mechanischer Überlastung sind bei dem hier dargestellten Ausführungsbeispiel ferner sowohl in der Antriebsschwinge 1 als auch im Antriebsarm 2 Scherbuchsen 10 bis 13 vorgesehen, in die der Scherbolzen 7 eingesetzt ist. Durch diese Scherbuchsen 10 bis 13 werden definierte Scherbereiche als sollbruchstellen geschaffen.

In der Bohrung 8 des Scherbolzens befindet sich ein Indikatorstift 14, der, wie insbesondere die Darstellung in Fig. 6 zeigt, mit zwei zylindrischen Anlageflächen 15 und 16 versehen ist. Eine dieser Anlageflächen 15 und 16 befindet sich, bei in den Scherbolzen 7 eingesetzten Indikatorstift 14, im Bereich der Antriebsschwinge 1, die zweite im Bereich einer der beiden Enden des gabelförmig ausgebildeten Antriebsarmes 2. Diese beiden Anlageflächen 15 und 16 sind über ihren gesamten Umfangsbereich in radialer Richtung formschlüssig mit der Wand der Bohrung 8 des Indikatorstiftes 14. Stirnseitig ist der Indikatorstift 14 mit einem Anlagebund 17 versehen. Dieser ist so geformt, daß er exakt in eine Aufnahmebohrung 18 eines Indikatorelementes 19 paßt.

Das Indikatorelement 19 besteht aus einem kreisförmigen Teilbereich 20 sowie einem einstückig an diesem angeformten Flanschbereich 21. Letzteres ist über Schrauben fest mit der Gabel des Antriebsarmes 2 verbunden. Der kreisförmige Teilbereich 20 wird dadurch fest gegen die Außenfläche der Gabel des Antriebsarmes 2 gepreßt und positioniert somit den Indikatorstift 14 in axialer Richtung. Das Indikatorelement 19 besteht bei dem hier beschriebenen Ausführungsbeispiel aus einem eingefärbten Kunststoff, der eine sehr niedrige Bruchdehnung aufweist. Ferner weist das Indikatorelement 19 in seinem kreisförmigen Teilbereich eine ringförmig um die Aufnahmebohrung 18 verlaufende Sollbruchstelle 22 auf.

Kommt es nun zu einer mechanischen Überlastung der Scherbolzenverbindung, so wird der Scherbolzen 7 dauerhaft plastisch verformt, und die Antriebsschwinge 1 verschiebt sich gegenüber der Gabel des Antriebsarmes 2 in radialer Richtung. Diese Bewegung wird durch den Indikatorstift 14 auf den kreisförmigen Teilbereich 20 des Indikatorelementes 19 übertragen, und zwar auf den die Aufnahmebohrung 18 umgebenden, innerhalb von der ringförmigen Sollbruchstelle 22 liegenden Bereich. Dies führt zunächst an der Sollbruchstelle 22 zu einer bleibenden Verfärbung, da sich in diesem Bereich der Kunststoff durch Lufteinschlüsse irreversibel aufhellt. Bei noch stärkerer Deformation der Scherbolzenverbindung kommt es in diesem Bereich zum Bruch des Indikatorelementes 19. Beides, sowohl die eingetretene Verfärbung als auch ein Bruch des Indikatorelementes 19 sind bei einer Sichtkontrolle dieses Bereiches im Rahmen einer normalen Wartung ohne weiteres zu erkennen, so daß die erforderlichen Reparatur- bzw. Austauschmaßnahmen erfolgen können.

Durch eine Variation der Lage der beiden Anlageflächen 15 und 16 des Indikatorstiftes 14 ist es möglich, die Ansprechempfindlichkeit der Anordnung gezielt so einzustellen, daß die durch Lasten innerhalb des Auslegebereiches der Anordnung hervorgerufenen elastischen Verformungen des Scherbolzens 7 nicht zu einer Veränderung und damit einer Anzeige des Indikatorelementes 19 führen.

## Patentansprüche

1. Scherbolzenverbindung zwischen zwei Komponenten, insbesondere zwischen einem Antriebsarm und einer Antriebsschwinge als den beiden Komponenten einer Betätigungsanordnung für eine Flügelklappe eines Verkehrsflugzeuges, dadurch gekennzeichnet, daß der Scherbolzen (7) eine axiale Bohrung (8) aufweist, in die ein Indikatorstift (14) eingesetzt ist, der an wenigstens zwei in axialer Richtung voneinander getrennt liegenden Bereichen (15,16) an der Innenwand der Bohrung (8) anliegt und der an wenigstens einem Ende aus dem Scherbolzen (7) herausragt und in diesem Bereich (17) in radialer Richtung formschlüssig mit einem visuellen Indikatorelement (19) verbunden ist, das seinerseits fest an einer der beiden Komponenten gehaltert ist und das Indikatorelement (19) zwischen seinem mit der Betätigungsanordnung verbundenen Teilbereich und seinem dem Indikatorstift (14) benachbarten Teilbereich eine Sollbruchstelle (22) mit einer sich farblich von der Umgebung unterscheidenden Bruchfläche aufweist.

2. Scherbolzenverbindung nach Anspruch 1, dadurch gekennzeichnet, daß das Indikatorelement (19) aus einem Kunststoff mit geringer elastischer Verformbarkeit besteht.

3. Scherbolzenverbindung nach Anspruch 1 oder 2, dadurch gekennzeichnet, daß das Indikatorelement (19) aus einem Kunststoff besteht, der sich bei einer Verformung verfärbt.

4. Scherbolzenverbindung nach einem der Ansprüche 1 bis 3, dadurch gekennzeichnet, daß der Indikatorstift (14) mit zwei ringförmigen Anlageflächen (15,16) versehen ist, von denen eine im Bereich des Antriebsarmes (2) und eine im Bereich der Antriebsschwinge (1) der Betätigungsanordnung liegt.

5. Scherbolzenverbindung nach einem der Ansprüche 1 bis 4, dadurch gekennzeichnet, daß der Scherbolzen (7) über Scherbuchsen (10-13) in den Antriebsarm (2) sowie die Antriebsschwinge (1) eingesetzt ist.

## Claims

1. Shear pin connection between two components, in particular between a driving arm and a driving rocker as the two components of an actuating arrangement for a pivoted flap of a commercial aircraft, characterized in that the shear pin (7) has an axial bore (8) into which there is inserted an indicator pin (14) which rests on the internal wall of the bore (8) on at least two regions (15, 16) located at an axial distance from one another, which projects from the shear pin (7) at least at one end and which is positively connected to a visual indicator element (19) in the radial direction in this region (17), the indicator element (19) in turn being rigidly mounted on one of the two components, and the indicator element (19) has, between its portion connected to the actuating arrangement and its portion adjacent to the indicator pin (14), a predetermined breaking point (22) with a break surface which is different in colour from the environment.

2. Shear pin connection according to claim 1, characterized in that the indicator element (19) consists of a plastics material with low elastic deformability.

3. Shear pin connection according to claim 1 or 2, characterized in that the indicator element (19) consists of a plastics material which discolours during deformation.

4. Shear pin connection according to one of claims 1 to 3, characterized in that the indicator pin (14) is provided with two annular contact faces (15, 16) of which one is located in the region of the driving arm (2) and one in the region of the driving rocker (1) of the actuating arrangement.

5. Shear pin connection according to one of claims 1 to 4, characterized in that the shear pin (7) is inserted into the driving arm (2) and the driving rocker (1) via shear pin bushes (10-13).

## Revendications

1. Assemblage à boulon de cisaillement entre deux composants, plus particulièrement entre un bras d'entraînement et un balancier d'entraînement tels les deux composants d'un dispositif de commande destiné à un volet d'aile d'un avion de transport, caractérisé en ce que le boulon de cisaillement (7) présente un alésage axial (8) dans lequel est insérée une cheville d'indication (14) reposant au moins par deux zones (15, 16) sur la paroi interne de l'alésage (8) séparées l'une de l'autre dans la direction axiale, faisant saillie au moins à une extrémité en dehors du boulon de cisaillement (7) et connectée à engagement positif dans ladite zone (17) et dans la direction radiale à un indicateur visuel (19) fixé, quant à lui, à un des composants, ledit indicateur (19) présentant, entre sa zone partielle connectée au dispositif de commande et sa zone partielle voisine de la cheville d'indication (14), une zone destinée à la rupture (22) pourvue d'une surface de rupture se distinguant de l'environnement par sa coloration.

2. Assemblage à boulon de cisaillement selon la revendication 1, caractérisé en ce que l'indicateur (19) se compose d'une matière plastique dont la déformabilité élastique est réduite.

3. Assemblage à boulon de cisaillement selon l'une ou l'autre des revendications 1 et 2, caractérisé en ce que l'indicateur (19) se compose d'une matière plastique qui se colore en cas de déformation.

4. Assemblage à boulon de cisaillement selon l'une ou l'autre des revendications 1 à 3, caractérisé en ce que la cheville d'indication (14) est pourvue de deux épaulements annulaires (15, 16) dont un se situe dans la zone du bras d'entraînement (2) et l'autre dans la zone du balancier d'entraînement (1) du dispositif de commande.

5. Assemblage à boulon de cisaillement selon l'une ou l'autre des revendications 1 à 4, caractérisé en ce que le boulon de cisaillement (7) est inséré par l'intermédiaire de douilles de cisaillement (10-13) dans le bras d'entraînement (2) ainsi que dans le balancier d'entraînement (1).
